# EUROPÄISCHE PATENTSCHRIFT

(11) **EP 0 914 232 B1**
(45) Veröffentlichungstag und Bekanntmachung des Hinweises auf die Patenterteilung: **13.09.2000**
(21) Anmeldenummer: 98905131.3
(22) Anmeldetag: 26.02.1998
(51) Int. Cl.: B23Q 9/00, B23Q 1/58, B23P 6/00, D21F 1/52

(54) **VORRICHTUNG ZUR OBERFLÄCHENBEARBEITUNG VON LANGGESTRECKTEN BELAGSELEMENTEN**
DEVICE FOR SURFACE WORKING OF EXTENDED COATING ELEMENTS
DISPOSITIF DESTINE AU TRAVAIL DE LA SURFACE DE GARNITURES ALLONGEES

(30) Priorität: 27.02.1997 AT 33497
(43) Veröffentlichungstag der Anmeldung: 12.05.1999
(73) Patentinhaber: Egger, Johann, 8833 Teufenbach (AT)
(72) Erfinder: Egger, Johann, 8833 Teufenbach (AT)
(74) Vertreter: Holzer, Walter, Dipl.-Ing.
(86) Internationale Anmeldenummer: AT9800042
(87) Internationale Veröffentlichungsnummer: WO9838007

(56) Entgegenhaltungen:
- DE-A- 3 933 506
- US-A- 3 382 768

## Beschreibung

Die vorliegende Erfindung betrifft eine Vorrichtung zur Oberflächenbearbeitung langgestreckter Elemente, insbesondere regenerierenden Oberflächenbearbeitung der Belagselemente von Entwässerungskästen einer Papiermaschine, mit:
einem Unterrahmen,
zwei Längsträgern, die vom Unterrahmen in einem Parallelabstand gehalten sind und an ihrer Oberseite Auflagerflächen bilden,
Linearführungen, welche auf den Auflagerflächen angeordnet sind,
einem Werkzeugschlitten, der die Vorrichtung querüberspannt und beidseits auf den Linearführungen geführt ist, und
zumindest einem Werkzeug zur Oberflächenbearbeitung der Belagselemente, welches vom Werkzeugschlitten getragen ist,

Derartige Belagselemente, wie sie beispielsweise in der DE 39 33 506 beschrieben sind, werden aus hochfesten Materialien, z.B. Keramik, gefertigt. Auf Grund der starken Beanspruchung des darüber ablaufenden Papiervliesträgers müssen die Belagselemente regelmäßig überschliffen werden. Das Überschleifen wurde bislang entweder händisch vor Ort durchgeführt, wobei die erzielbare Oberflächengenauigkeit begrenzt war, oder die Belagselemente mußten für das Überschleifen zum Hersteller transportiert werden, was eine beträchtliche Ausfallzeit der Papiermaschine bedingte. Darüber hinaus ist bei manchen Papiermaschinen das zwecks leichteren Transportes zum Hersteller erforderliche Abmontieren der Belagselemente relativ schwierig, was den Kosten- und Zeitaufwand noch erhöht.

Aus der US 3 382 768 ist eine transportable Bearbeitungsvorrichtung mit Längsträgern, Linearführungen, einem darauf geführten Werkzeugschlitten und einem Bearbeitungswerkzeug bekannt, welche mit Hilfe von Gestellfüßen über einem am Boden fest montierten Werkstück, z.B. einer Schiebetorführungsschiene, aufgestellt werden kann, um diese zu bearbeiten.

Die Erfindung setzt sich zum Ziel, eine Möglichkeit zu schaffen, die Belagselemente von Papiermaschinen jedweder Art mit hoher Genauigkeit und bei kurzer Ausfallzeit der Papiermaschine zu regenerieren. Dieses Ziel wird mit einer Vorrichtung der einleitend genannten Art erreicht, die sich dadurch auszeichnet,
daß die Längsträger zwischeinander einen im wesentlichen trogförmigen Aufnahmeraum zur wahlweisen Aufnahme eines Entwässerungskastens mit montierten Belagselementen bilden,
wobei eine Abstützplatte vorgesehen ist, die zur wahlweise alternativen Abstützung von einzelnen Belagselementen auf die Auflagerflächen in einer den Aufnahmeraum überspannenden Weise entfernbar auflegbar ist.

Auf diese Weise wird eine transportable Vorrichtung geschaffen, welche in der Lage ist, langgestreckte Elemente, insbesondere von Papiermaschinen, in jedem Fall (d.h. sowohl mit den als auch ohne die sie tragenden Entwässerungskästen) vor Ort mit hoher Genauigkeit und in kürzestmöglicher Zeit zu bearbeiten.

Die erfindungsgemäße Vorrichtung ist universell für alle Arten von Belagselementen einsetzbar, seien sie in einzelner Form oder mitsamt den sie tragenden Stützstrukturen, z.B. Entwässerungskästen.

Belagselemente bzw. Entwässerungskästen können eine Breite zwischen 10 mm und 1 m und eine beträchtliche Länge in der Größenordnung von bis zu 10 m haben. Bei solch großen Bearbeitungslängen ist die Durchbiegung sowohl der Werkzeugführungen als auch der Werkstückauflager beim Abfahren der Länge des Werkstückes mit dem Werkzeug für die Toleranz des Endproduktes bedeutsam, was bei ortsfesten Anlagen durch entsprechend feste Fundamente, Führungen und Werktische berücksichtigt wird, die sich jedoch für einen transportablen Einsatz verbieten.

In der Verwendungsstellung mit aufgelegter Abstützplatte beziehen sich bei der Erfindung die Werkzeugführungen auf dieselben Referenzflächen wie die Werkstückabstützungen. Dadurch geht eine allfällige Durchbiegung der Längsträger nicht in die Endtoleranz des Werkstückes ein. Die Längsträger und ihr Unterrahmen können daher entsprechend leichtgewichtig und transportabel ausgeführt werden, so daß ein besonders genaues Schleifen einzelner Belagselemente am Kundenort möglich ist.

Eine bevorzugte Ausführungsform der Erfindung zeichnet sich dadurch aus, daß zumindest eine Auflagerfläche mit einem Anschlag zur Ausrichtung der Linearführung versehen ist, was die Justierung-der Vorrichtung erleichtert.

Besonders vorteilhaft ist es, wenn die Auflagerflächen mit Bohrungen zur Fixierung der Abstützplatte ausgestattet sind. Dadurch kann die Abstützplatte mit den Längsträgern vorübergehend fest verbunden werden, wenn dies gewünscht wird, z.B. durch Verschrauben.

In jedem Fall besteht eine bevorzugte Ausführungsform der Erfindung darin, die gesamte Vorrichtung auf der Ladefläche eines Lastkraftwagens, -anhängers, Sattelaufliegers od.dgl. anzuordnen. Dadurch kann die Vorrichtung auf einfache Weise zum Kundenort befördert werden.

Die Erfindung wird an Hand eines in den Zeichnungen dargestellten Ausführungsbeispieles näher erläutert. In den Zeichnungen zeigen die
Fig. 1 und 2 zwei Querschnitte der Vorrichtung auf unterschiedlichen Längspositionen und in zwei verschiedenen Verwendungsstellungen der Vorrichtung, und
Fig. 3 einen Ausschnitt der Vorrichtung in der Seitenansicht auf Höhe des Werkzeugschlittens.

Die Vorrichtung weist zwei Längsträger 1, 2 auf, die über einen Unterrahmen 3 in gegenseitigem Parallelabstand gehalten sind. Der Unterrahmen 3 umfaßt Rahmenlängselemente 4 und Rahmenquerelemente 5, 6. Die Längsträger 1, 2 sind an ihren Enden zusätzlich über Querstangen 7 verstrebt und bilden zwischeneinander einen trogförmigen Aufnahmeraum 8. Die Längsträger 1, 2 und der Unterrahmen 3 sind ferner mit Hilfe von Querrippen 9, 10 versteift.

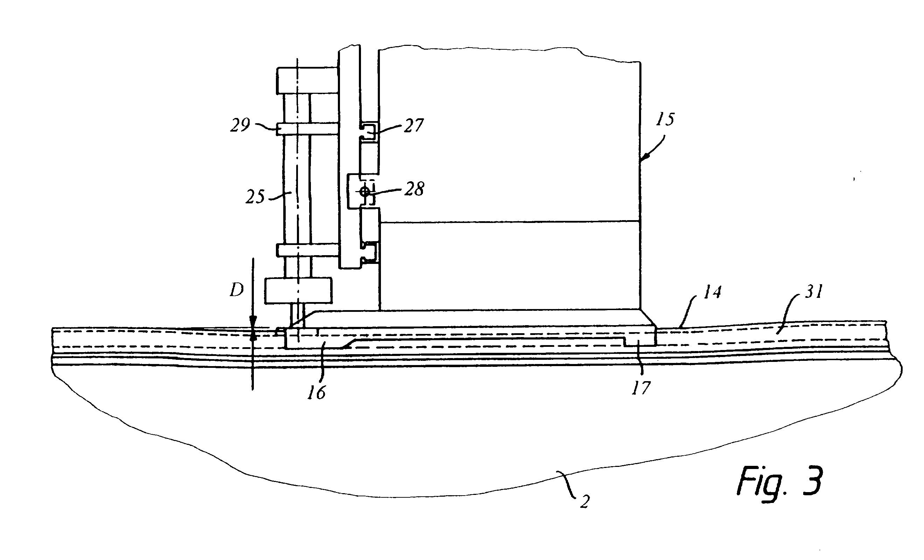

Die Längsträger 1, 2 bilden an ihrer Oberseite Auflagerflächen 11, 12, auf denen Linearführungen 13, 14 für einen die Vorrichtung querüberspannenden Werkzeugschlitten 15 angeordnet sind. Der Werkzeugschlitten 15 stützt sich auf jeder der Linearführungen 11, 12 mit Hilfe von zwei Rollschuhen 16, 17 ab (Fig. 3). In der Auflagerfläche 11 ist ein Anschlag 19 für die Linearführung 13 ausgebildet.

Der Werkzeugschlitten 15 ist mit einem Antriebsmotor 21 ausgestattet, welcher über einen Riementrieb 22 ein Ritzel 23 antreibt, das in einer Zahnstange 24 an der Unterseite der Auflagerfläche 11 des Längsträgers 1 kämmt. Der Werkzeugschlitten 15 trägt ein Werkzeug 25, im gezeigten Fall ein_Schleifgerät mit einer Stirnschleifscheibe 26. Das Werkzeug 25 ist über Querführungen 27 und einen Spindelantrieb 28 in Querrichtung, über eine Höhenführung 29 in der Höhe, sowie (in nicht dargestellter Weise) in der Neigung verstellbar gelagert. Die Steuerung des Werkzeugschlittens 15 und des Werkzeuges 25 ist in einem Schaltschrank 30 auf dem Werkzeugschlitten 15 selbst angeordnet.

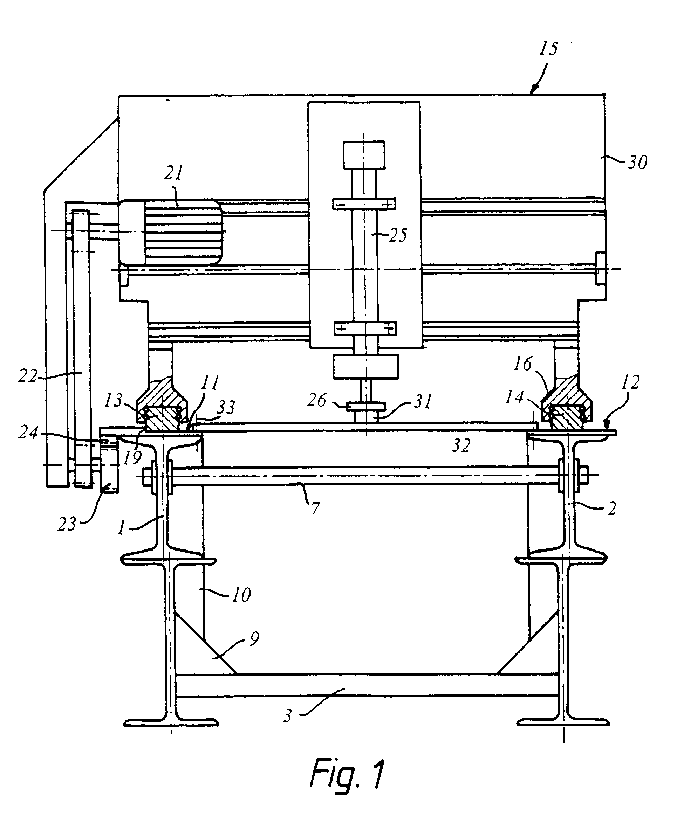

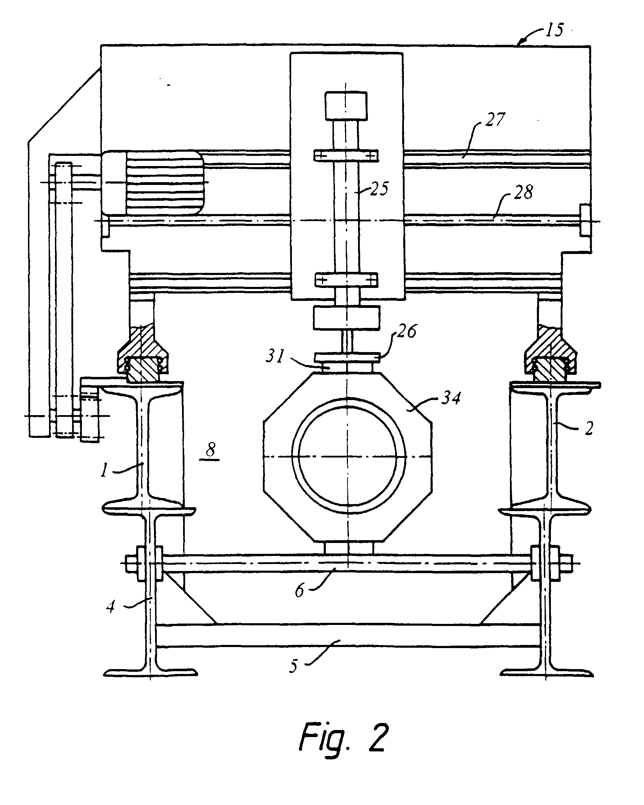

In den Fig. 1 und 2 sind beide Varianten von Werkstücken dargestellt, welche mit der Vorrichtung bearbeitet werden können. In Fig. 1 ist ein stabförmiges Belagselement 31 gezeigt, welches auf einer Abstützplatte 32 ruht, die auf den Auflagerflächen 11, 12 der Längsträger 1, 2 aufliegt. Die Abstützplatte 32 kann über Bohrungen 33 mit den Auflagerflächen 11, 12 verschraubt sein. In Fig. 2 ist die Abstützplatte 32 entfernt, und zwei stabförmige Belagselemente 31 mitsamt einem sie tragenden Entwässerungskasten 34 der Papiermaschine sind in die Aufnahme 8 eingelegt.

In Fig. 3 ist die Durchbiegung D schematisch und vergrößert dargestellt, um welche sich die Längsträger 1, 2 und das stabförmige Belagselement 31 während des Schleifvorganges lokal verformen. Es ist ersichtlich, daß die Relativbewegung zwischen Werkzeug und Werkstück im wesentlichen gleich Null ist.

Die Vorrichtung läßt sich für jede Art von Oberflächenbearbeitung der Belagselemente einsetzen, sei es zum Fräsen, Schleifen, Honen oder Läppen. Es können Belagselemente aus Metall, Kunststoff oder Keramik bearbeitet werden.

Die gesamte Vorrichtung ist transportabel und kann auf der Ladefläche eines Lastkraftwagens, -anhängers, Sattelaufliegers od.dgl. angeordnet und zum Einsatzort beim Kunden transportiert werden.

## Patentansprüche

1. Vorrichtung zur Oberflächenbearbeitung langgestreckter Elemente, insbesondere regenerierenden Oberflächenbearbeitung der Belagselemente (31) von Entwässerungskästen (34) einer Papiermaschine, mit:
einem Unterrahmen (3),
zwei Längsträgern (1, 2), die vom Unterrahmen (3) in einem Parallelabstand gehalten sind und an ihrer Oberseite Auflagerflächen (11, 12) bilden,
Linearführungen (13, 14), welche auf den Auflagerflächen (11, 12) angeordnet sind,
einem Werkzeugschlitten (15), der die Vorrichtung querüberspannt und beidseits auf den Linearführungen (13, 14) geführt ist, und
zumindest einem Werkzeug (25) zur Oberflächenbearbeitung der Belagselemente (31), welches vom Werkzeugschlitten (15) getragen ist,
dadurch gekennzeichnet,
daß die Längsträger (1, 2) zwischeinander einen im wesentlichen trogförmigen Aufnahmeraum (8) zur wahlweisen Aufnahme eines Entwässerungskastens (34) mit montierten Belagselementen (31) bilden,
wobei eine Abstützplatte (32) vorgesehen ist, die zur wahlweise alternativen Abstützung von einzelnen Belagselementen auf die Auflagerflächen (11, 12) in einer den Aufnahmeraum (8) überspannenden Weise entfernbar auflegbar ist.

2. Vorrichtung nach Anspruch 1, dadurch gekennzeichnet, daß zumindest eine Auflagerfläche (11) mit einem Anschlag (19) zur Ausrichtung der Linearführung (13) versehen ist.

3. Vorrichtung nach Anspruch 1 oder 2, dadurch gekennzeichnet, daß die Auflagerflächen (11, 12) mit Bohrungen (33) zur Fixierung der Abstützplatte (32) ausgestattet sind.

4. Vorrichtung nach einem der Ansprüche 1 bis 3, dadurch gekennzeichnet, daß sie auf der Ladefläche eines Lastkraftwagens, -anhängers, Sattelaufliegers od.dgl. angeordnet ist.

## Claims

1. Device for the surface working of elongated elements, in particular the regenerative surface working of the coating elements (31) of drainage boxes (34) of a paper machine, comprising a bottom frame (3), two longitudinal supports (1, 2) held at a parallel distance by the bottom frame (3) and forming bearing surfaces (11, 12) at the top thereof, linear guides (13, 14) arranged on the bearing surfaces (11, 12), a tool slide (15) which traverses the device and is guided on either side on the linear guides (13, 14), and at least one tool (25) for the surface working of the coating elements (31) carried by the tool slide (15), characterised in that the longitudinal supports (1, 2) form between them a substantially trough-shaped receiving space (8) for receiving a drainage box (34) with mounted coating elements (31) as required, wherein a supporting plate (32) is provided and can be removably placed on the bearing surfaces (11, 12) in such a manner that it traverses the receiving space (8) for alternative support of individual coating elements as required.

2. Device according to claim 1, characterised in that at least one bearing surface (11) is provided with a stop (19) for aligning the linear guide (13).

3. Device according to claim 1 or claim 2, characterised in that the bearing surfaces (11, 12) are provided with bores (33) for fixing the supporting plate (32).

4. Device according to one of claims 1 to 3, characterised in that it is arranged on the loading area of a lorry, goods trailer, semitrailer or the like.

## Revendications

1. Dispositif destiné au traitement de surface d'éléments allongés ou de grande longueur, dispositif destiné en particulier au traitement régénérateur de surface des éléments de garnissage ou de revêtement des caisses d'égouttage ou séchage (34) d'une machine de fabrication du papier, comportant :
un châssis inférieur (3),
deux poutres longitudinales ou longerons (1,2) qui sont maintenus dans un espacement parallèle entre eux par le châssis inférieur (3) et forment des faces de support (11,12) sur leur côté supérieur,
des guidages linéaires (13,14) qui sont disposés sur les faces de support (11,12),
un chariot ou coulisseau porte-outil (15) qui enjambe transversalement le dispositif et qui est guidé des deux côtés sur les guidages linéaires (13,14), et
au moins un outil (25) destiné au traitement de surface des éléments de garnissage ou de revêtement (31), outil qui est monté sur le chariot porte-outil (15),
caractérisé en ce que
les longerons (1,2 ) forment entre eux un espace de logement (8) sensiblement en forme d'auge pour la réception sélective d'une caisse d'égouttage ou de séchage (34) avec les éléments de garnissage ou de revêtement (31) installés,
moyennant quoi, il est prévu une plaque d'appui (32) pouvant recevoir de façon amovible, en vue de leur appui sélectif alterné, les différents éléments de garnissage ou de revêtement sur les faces de support (11,12) d'une manière enjambant l'espace de logement (8).

2. Dispositif selon la revendication 1, caractérisé en ce qu' au moins une face de support (11) est munie d'une butée (19) servant à l'alignement du guidage linéaire (13).

3. Dispositif selon la revendication 1 ou deux, caractérisé en ce que les faces de support (11,12) sont dotées d'alésages (33) destinée à la fixation de la plaque d'appui (32).

4. Dispositif selon l'une des revendications 1 à 3, caractérisé en ce qu'il est disposé sur la plate - forme ou aire de chargement d'un camion, d'une remorque, d'un camion semi-remorque ou d'un véhicule analogue.
